Europäisches Patentamt

European Patent Office

Office européen des brevets

(11) Veröffentlichungsnummer: **0 072 400**
A1

## (12) EUROPÄISCHE PATENTANMELDUNG

(21) Anmeldenummer: 82105326.1

(22) Anmeldetag: 18.06.82

(51) Int. Cl.³: **F 16 B 13/14**

(30) Priorität: 17.08.81 DE 3132444

(43) Veröffentlichungstag der Anmeldung:
23.02.83 Patentblatt 83/8

(84) Benannte Vertragsstaaten:
AT BE CH FR GB IT LI NL

(71) Anmelder: artur fischer forschung
Weinhalde 14 - 18
D-7244 Waldachtal 3 (Tumlingen)(DE)

(72) Erfinder: Fischer, Artur, Dr. h. c.
Weinhalde 34
D-7244 Tumlingen(DE)

(54) Spreizdübel.

(57) Die insbesondere bei weichen und porösen Baustoffen bei der Herstellung der Bohrlöcher auftretenden Bohrlochtoleranzen führen zu erheblichen Schwierigkeiten. Zur Lösung dieses Problems wird bei einem aus Kunststoff bestehenden, mit Längsschlitzen und mit einer durchgehenden, im Anschluß an einen zylindrischen Teilabschnitt sich zum Einführende des Dübels hin konisch verengenden und mit im Anfangsbereich des zylindrischen Teilabschnittes beginnenden Längsrippen versehenen Innenbohrung zur Aufnahme einer Befestigungsschraube (3) sowie mit am Außenumfang des Dübels angeordneten umlaufenden Einstichen versehenen Spreizdübel vorgeschlagen, daß einer (6a) der Längsschlitze auf der gesamten Länge des Dübels dessen Wandung durchschneidet. Dadurch ergibt sich eine Anpassungsmöglichkeit des Spreizdübels an unterschiedliche Bohrlochdurchmesser einerseits und eine Verspannungsmöglichkeit auf der gesamten Länge des Spreizdübels andererseits.

FIG.3

EP 0 072 400 A1

# S P R E I Z D Ü B E L

Die Erfindung betrifft einen aus Kunststoff bestehenden, mit Längsschlitzen versehenen Spreizdübel insbesondere für weiche und poröse Baustoffe mit einer durchgehenden, im Anschluß an einen zylindrischen Teilabschnitt sich zum Einführende des Dübels hin konisch verengenden und mit im Anfangsbereich des zylindrischen Teilabschnittes beginnenden Längsrippen versehenen Innenbohrung zur Aufnahme einer Befestigungsschraube, sowie mit am Außenumfang des Dübels angeordneten umlaufenden Einstichen.

In weichen und porösen Baustoffen, Hohlkammersteinen und dgl. fallen die Durchmesser der für das Einsetzen von Dübeln vorzubereitenden Bohrlöchern sehr unterschiedlich aus. Bei Verwendung von Schlagbohrmaschinen werden die Bohrlöcher durch den Schlagvorgang und damit verbundenen Ausbrüchen des Baustoffes erheblich größer und bei nassen Baustoffen insbesondere bei Gasbeton mit normalen Bohrmaschinen erheblich kleiner als es für die optimale Funktion der einzusetzenden Dübel erforderlich wäre. Wegen dieser Funktionseinbußen ist es bei den bekannten Spreizdübeln notwendig, durch hohe Sicherheitsbeiwerte die an den Dübel anhängbaren Lasten erheblich zu reduzieren.

Der Erfindung liegt die Aufgabe zugrunde, einen Spreizdübel zu schaffen, der die insbesondere bei weichen und porösen Baustoffen auftretenden Bohrlochtoleranzen ohne wesentlichen Haltewertsverlust auszugleichen in der Lage ist.

EP 1446

*2*

Erfindungsgemäß wird dies dadurch erreicht, daß einer der Längsschlitze auf der gesamten Länge des Dübels dessen Wandung durchschneidet.

Durch diese Maßnahme wirkt der gesamte Dübel als Art Spannhülse, die sich den unterschiedlichen Bohrlochdurchmessern anpassen kann. Durch die federnde Anlage der Umfangsfläche des Dübels an der Bohrlochwandung ergibt sich eine Drehsicherung, die mit dem Eindrehmoment der Befestigungsschraube ansteigt. Durch die an der Außenfläche des Dübels vorgesehenen Einstiche in rechteckigem, trapezförmigem oder ähnlichem Profil ergibt sich eine Unterbrechung der Außenfläche des Dübels, so daß eine gute Reibhaftung aufgrund der Anpassungsfähigkeit der Mantelfläche des Dübels an unrunde und rauhe Bohrlochwandungen entsteht. Schon bei einem sehr geringen Spreizdruck drückt sich die Mantelfläche des Dübels in die Bohrlochwandung ein und schafft somit einen Formschluß, der zu hohen Haltewerten führt. Bei harten Baustoffen werden die durch die umlaufenden Einstiche entstehenden Zähne verformt, so daß durch die Verkeilung auch in harten Baustoffen hohe Haltewerte erzielbar sind. Aufgrund der guten Anpassungsfähigkeit der Außenfläche des Dübels an die Bohrlochwandung und der damit verbundenen optimalen Abstützung des Dübels ist dieser Dübel auch zur Aufnahme hoher Querkräfte, wie sie beispielsweise bei der Treppenbefestigung entstehen, geeignet.

Die Breite des die Wandung des Dübels durchschneidenden Längsschlitzes ist so gewählt, daß bei entspanntem Dübel noch eine Anlage der Außenfläche des Dübels an der Bohrlochwandung

*3*

bei größtmöglicher Bohrlochtoleranz erreicht ist, jedoch
ein Zusammendrücken auf den kleinstmöglichen Toleranzbereich
möglich ist. Diese Bedingung wird üblicherweise dann erfüllt,
wenn das Maß der Schlitzweite ca 10% des Durchmessers des
Dübels beträgt.

In einer weiteren Ausgestaltung der Erfindung kann im Bereich der sich verengenden Innenbohrung die am Außenumfang
angeordneten umlaufenden Einstiche tiefer eingeschnitten
sein.  Durch diese  Maßnahme wird die Verformbarkeit und
Anpassungsfähigkeit des Dübels im Bereich der durch die
sich verengende Innenbohrung erhöhten Spreizung gesteigert.
Die tiefen Einschnitte bilden Gelenke zwischen den einzelnen
Zähnen, so daß das Spreizvermögen des Dübels durch die
Materialsteifigkeit nicht bzw. nur unwesentlich beeinträchtigt
wird.

In einer weiteren Ergänzung der Erfindung kann der Dübel
mit vier kreuzförmig angeordneten Längsschlitzen versehen
sein, wobei die drei die Wandung des Dübels nicht durchschneidenden Schlitze radial sich zumindest bis zum Grund
der tiefer eingeschnittenen umlaufenden Einstiche erstrecken .

Durch die Anbringung von vier kreuzförmig angeordneten Längsschlitzen wird die Federwirkung  und damit die Anpassungsfähigkeit an unterschiedliche Bohrlochtoleranzen des als
Spannhülse wirkenden Dübels noch verbessert. Bei den drei
sich radial bis zum Grund der tiefer eingeschnittenen umlaufenden Einstiche erstreckenden Längsschlitze wird im Bereich der Einstiche die Wandung des Dübels ebenfalls durchschnitten. Es entstehen somit im Bereich des Spreizteiles vier Spreizsegmente, die trotz der noch bestehenden Anbindung über die Zähne beim Eindrehen der Befestigungsschraube in die sich verengende Innenbohrung ähnlich wirken wie vier vollständig getrennte Spreizsegmente.

Der erfindungsgemäße Dübel eignet sich aufgrund der Verspannungsmöglichkeit auf seiner ganzen Länge auch für Abstandsmontagen, da durch die Verspannung im zu befestigenden Gegenstand der eingestellte, bzw. durch Unebenheiten der Wand sich ergebende Abstand fixiert wird. Die auf den zu befestigenden Gegenstand wirkenden Druckkräfte werden somit über den Dübel aufgenommen. Zur Erzielung hoher Verspannungskräfte im zu befestigenden Gegenstand können in einer weiteren Ausgestaltung der Erfindung die umlaufenden Einstiche auf der gesamten Länge des Dübels angeordnet sein. Die durch die Einstiche entstehenden Zähne können sich in die Bohrlochwandung des zu befestigenden Gegenstandes eingraben und bilden somit eine feste Verbindung. Um das Eingraben in die Bohrlochwandung zu erleichtern empfiehlt es sich die Einstiche in diesem Bereich trapezförmig auszubilden, um scharfe, sich leicht eingrabende Zähne zu erhalten.

Eine weitere Maßnahme zur Verbesserung der Verspannung im zu befestigenden Gegenstand wird in der weiteren Ergänzung der Erfindung erreicht, daß sich das Schraubengewinde auf die gesamte Länge der Befestigungsschraube erstreckt. Damit wird bereits im zu befestigenden Gegenstand ein starker Spreizdruck erzeugt, der die gewünschte Verspannung des im Abstand zu haltenden Gegenstandes bewirkt.

5

In der Zeichnung sind Ausführungsbeispiele der Erfindung dargestellt.

Es zeigen:

Figur 1   den Dübel im Längsschnitt,

Figur 2   einen Querschnitt des Dübels entsprechend der Schnittlinie I - I,

Figur 3   eine Abstandsmontage mit dem erfindungsgemäßen Dübel.

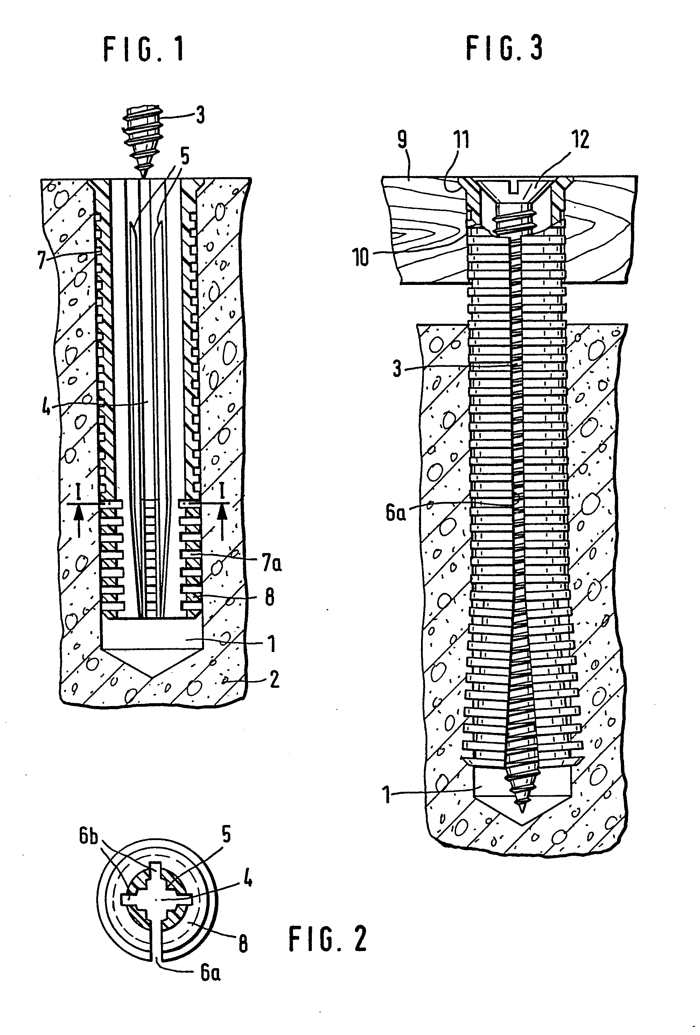

Der Dübel gemäß Figur 1 ist in einem Bohrloch 1 eines Bausteines 2 eingesetzt. Für das Eindrehen einer Befestigungsschraube 3 ist der Dübel mit einer durchgehenden Innenbohrung 4 versehen, die sich im Anschluß an den zylindrischen Teilabschnitt zum Einführende des Dübels hin konisch verengt. Zum leichteren Eindrehen der Befestigungsschraube 3 ist die Innenbohrung nahezu auf ihrer gesamten Länge mit Längsrippen 5 versehen. Zur Erzielung der Federeigenschaft einer Spannhülse durchschneidet einer der vier in Kreuzform angeordneten Längsschlitze 6a vollständig und auf der ganzen Länge die Wandung des Dübels(Figur 2). Die übrigen drei Längsschlitze 6b erstrecken sich in radialer Richtung soweit, daß an den tieferen umlaufenden Einstichen 7a des Dübels dessen Wandung ebenfalls durchtrennt wird. Die nur über die Anbindung der Zähne 8 verbundenen vier Spreizsegmente ermöglichen somit trotz der hohen Materialsteifigkeit des Dübels eine gute Aufspreizung.

Bei der Verankerung des Dübels drücken sich die durch die Einstiche 7 ergebenden Zähne 8 im Bereich des zylindrischen Teilabschnittes der Innenbohrung 4 weniger und im Bereich der Verengung und aufgrund der tieferen Einstiche 7a stärker in das Material ein. Diese durch den Spannhülseneffekt mögliche Verankerung des Dübels führt zu einer Abstützung des Dübels im Bohrloch 1 auf seiner gesamten Länge, so daß neben einer hohen Zugkraft auch hohe Querkräfte - wie es bei der Treppenbefestigung erforderlich ist - aufgenommen werden.

In Figur 3 ist die Abstandsmontage eines Gegenstandes 9 dargestellt, dessen Durchgangsbohrung 10 dem Durchmesser der Bauwerksbohrung 1 entspricht. Die Abstandshalterung des Gegenstandes 9 erfolgt durch die auch in der Bohrung 10 des Gegenstandes stattfindenden Verspannung, die noch dadurch begünstigt wird, daß die Einstiche 7 und damit die Zahnbildung bis zum Rand 11 des Dübels reicht.
Ferner wird durch das bis zum Kopf 12 der Schraube 3 sich erstreckende Gewinde ein entsprechender die Zähne 8 in die Bohrlochwandung eindrückender Spreizdruck erzeugt.

artur fischer forschung

7244  Waldachtal 3/Tumlingen

0072400

den 12. August 1981
Ju/Sl

EP 1446

- 1 -

P a t e n t a n s p r ü c h e

1.  Aus Kunststoff bestehender, mit Längsschlitzen versehener Spreizdübel insbesondere für weiche und poröse Baustoffe mit einer durchgehenden, im Anschluß an einen zylindrischen Teilabschnitt sich zum Einführende des Dübels hin konisch verengenden und mit im Anfangsbereich des zylindrischen Teilabschnittes beginnenden Längsrippen versehenen Innenbohrung zur Aufnahme einer Befestigungsschraube, sowie mit am Außenumfang des Dübels angeordneten umlaufenden Einstichen, dadurch gekennzeichnet, daß einer der Längsschlitze auf der gesamten Länge des Dübels dessen Wandung durchschneidet.

2.  Spreizdübel nach Anspruch 1, dadurch gekennzeichnet, daß im Bereich der sich verengenden Innenbohrung die am Außenumfang angeordneten umlaufenden Einstiche tiefer eingeschnitten sind.

3.  Spreizdübel nach Anspruch 1 und 2, dadurch gekennzeichnet, daß der Dübel mit vier kreuzförmig angeordneten Längsschlitzen versehen ist, wobei die drei die Wandung des Dübels nicht durchschneidenden Schlitze radial sich zumindest bis zum Grund der tiefer eingeschnittenen umlaufenden Einstiche erstrecken.

- 2 -

**0072400**

- 2 -

4.  Spreizdübel nach Anspruch 1, dadurch gekennzeichnet, daß die umlaufenden Einstiche auf der gesamten Länge des Dübels angeordnet sind.

5.  Spreizdübel nach Anspruch 1, dadurch gekennzeichnet, daß sich das Schraubengewinde auf die gesamte Länge der Befestigungsschraube erstreckt.

0072400

1/1

FIG.1

FIG.3

FIG. 2

| Kategorie | Kennzeichnung des Dokuments mit Angabe, soweit erforderlich, der maßgeblichen Teile | betrifft Anspruch | KLASSIFIKATION DER ANMELDUNG (Int. Cl.⁴) |
|---|---|---|---|
| | **EINSCHLÄGIGE DOKUMENTE** | | |
| Y | DE – U – 1 925 960 (STE CIVILE D'ETUDES DE PROCEDES DE SCELLEMENTS) <br> * Fig. 2 * <br> —— | 1,3,5 | F 16 B 13/14 |
| Y | DE – U – 6 610 783 (FISCHER) <br> * Fig. 2 * <br> —— | 1 | |
| Y | AU – B – 211 527 (KÜPPER) <br> * Zeilen 28ff; Fig. 3 * <br> —— | 1 | |
| Y | CH – A – 290 807 (VAN DER RIJN) <br> * Fig. 3 * <br> —— | 1 | **RECHERCHIERTE SACHGEBIETE (Int. Cl.³)** <br><br> F 16 B 13/00 |
| Y | CH – A – 366 377 (TORNADO RAMSET) <br> * Fig. 1b * <br> —— | 1,3 | |
| Y | US – A – 3 921 496 (HELDERMAN) <br> * Fig. 1 * <br> —— | 1,4 | |
| Y | US – A – 3 996 835 (CHROMY) <br> * Zusammenfassung * <br> & DE – A – 2 412 901 <br> —— | 1 | |
| Y | DE – A1 – 2 452 478 (ARBMAN DEVELOPMENT) <br> * Fig. 1 * <br> —— | 1 | |
| Y | FR – A – 2 063 663 (AUZOULAT) <br> * Fig. 3 * <br> —— | 4,5 | |
| A | GB – A – 1 332 961 (VON WOLFF et al.) | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 23-08-1982 | ZAPP |

EPA form 1503.1 06.78